# FASCICULE DE BREVET EUROPEEN

(11) **EP 1 082 898 B1**
(45) Date de publication et mention de la délivrance du brevet: **09.09.2009**
(21) Numéro de dépôt: 00402446.9
(22) Date de dépôt: 05.09.2000
(51) Int. Cl.: A01K 67/00, G06G 1/00, A23K 1/175, A01K 29/00

(54) **Système pour la détermination d'une complémentation minérale pour l'alimentation animale**
Vorrichtung zur Ermittlung eines mineralischen Tierfutterzusatzes
Device for determining a mineral animal feed supplement

(30) Priorité: 08.09.1999 FR 9911238
(43) Date de publication de la demande: 14.03.2001
(73) Titulaire: Société Anonyme des Procédés Roland Pigeon, 75015 Paris (FR)
(72) Inventeur: Roussekiere, Guy, 75014 Paris (FR)
(74) Mandataire: Michelet, Alain

(56) Documents cités:
- EP-A- 0 095 883
- BE-A- 707 577
- FR-A- 2 074 610

## Description

La présente invention décrit un procédé de détermination d'une complémentation minérale pour l'alimentation animale. Elle a des applications dans l'élevage des animaux, de sorte que leur alimentation soit optimisée. L'invention concerne un dispositif pour la mise en oeuvre du procédé.

Les conditions modernes de l'élevage nécessitent la prise en compte de nombreux paramètres et, par exemple, des facteurs biologiques, environnementaux ou économiques, entre autres. Dans les facteurs biologiques entrent en ligne de compte le type d'animal: à viande, reproducteur ou pour la production laitière ainsi que le potentiel génétique de l'animal, par exemple. Les facteurs environnementaux sont notamment liés à la qualité des infrastructures, à celle des sources d'alimentation et autres. Les facteurs économiques sont en particulier le coût des animaux, des infrastructures ou de l'alimentation, la durée de l'élevage, les prix de vente, les subventions, etc... .

Le processus de prise de décision de l'éleveur dans le choix de l'alimentation optimale est donc potentiellement très complexe. La plupart du temps, l'éleveur est contraint d'utiliser des règles plus ou moins empiriques et non systématisées pour se déterminer.

La présente invention décrit, dans le cadre de l'alimentation des animaux d'élevage où une complémentation minérale doit être apportée, un procédé et concerne des dispositifs de mise en oeuvre dudit procédé permettant d'optimiser la quantité de complément minéral qui doit être fournie à l'animal selon les revendications indépendantes 1 et 10.

Les animaux d'élevage prélèvent par pâturage et/ou reçoivent par nourrissage, de la nourriture que l'on quantifie par la mesure ou l'estimation de la matière sèche correspondante. Dans la suite, cette quantité de nourriture par jour et animal est désignée par ration totale de matière sèche (RTMS). La richesse de la nourriture varie selon son origine et doit être plus ou moins complémentée par l'apport d'éléments du type nutriment (par exemple acides aminés indispensables) et/ou oligo-éléments et/ou vitamines et/ou minéraux (bloc de sel...). La complémentation alimentaire typique décrite dans le brevet FR-73.10.450 (publication 2222024) de la requérante peut être ainsi utilisée.

Le document FR-A-2074610 divulgue un dispositif manuel permettant aisément d'équilibrer les besoins nutritifs des vaches laitières en simplifiant les recherches, facilitant les calculs, précisant les apports du rationnement individuel journalier.

Les produits alimentaires, pour animaux, objets de ce brevet, ont une composition et un dosage basés sur le principe d'équilibre minéral, respectant intégralement la loi des facteurs minimum de Liébig. Une judicieuse utilisation des minéraux permet une économie appréciable d'aliments traditionnels. La résistance à la maladie (phagocytose), les rendements et la qualité sont renforcés. Selon le principe ci-dessus défini, la présence de 24 sels minéraux (macro-éléments, oligo-éléments) sous une forme et une concentration spécifiques, permet de maintenir l'équilibre microbiologique, tant dans le règne végétal qu'animal. Pour une plus grande commodité, ces 24 sels minéraux seront appelés ci-après les oligo-éléments. Douze agissent comme bioactivateurs bactériens et douze comme biomodérateurs bactériens. Les produits selon l'invention sus-mentionnée tendent à cet équilibre. Eviter la carence de certains de ces 24 sels ou rétablir l'équilibre de ces derniers revient à éloigner les risques de maladies. Par exemple dans le cas de mammites, fièvres aphteuses, brucelloses, panaris, peste, coccidiose, etc..., on a toujours constaté la carence de certains oligo-éléments. Le simple fait de les ajouter â la ration journalière enraye en quelques jours ces infections bactériennes. Il va de soi que le choix et le dosage de ces oligo-éléments sont différents selon la région et la nature de l'environnement et principalement celle des sols.

La consommation régulière de ces sels minéraux ainsi dosés judicieusement dans les produits selon l'invention, prévient toutes les incidences pathologiques, tout en augmentant les rendements et la qualité.

On redonne ainsi auxdits sels minéraux le rôle de guide dans l'évolution favorable de chaque espèce animale.

De plus, lesdits produits alimentaires sont très facilement contrôlables et stables pendant leur conservation. Cette dernière se fait bien entendu en l'absence totale d'antibiotiques et d'agents conservants de synthèse, plus ou moins toxiques ou néfastes. Ils améliorent la réaction biophysique de l'organisme.

Lesdits produits sont constitués avec un dosage déterminé, à partir d'au moins 90% de matières minérales de base.

Lesdites matières minérales sont elles-mêmes constituées par:
a) du carbonate de calcium (CO₃Ca) à raison d'environ 55% du poids total du produit. Cette proportion constitue une limite inférieure. Elle représente environ 21% du calcium.
b) du chlorure de sodium (ClNa) à raison d'environ 15% du poids total, et ce, en limite supérieure.
c) une matière faite d'insolubles chlorhydriques (c'est-à-dire du sable, constitué surtout par les déchets du broyage des calcaires), â raison de 20% du poids total. Cette proportion constitue également une limite supérieure.

La RTMS est généralement exprimée en kg par animal par jour. Par exemple une vache laitière produisant 20 kg de lait par jour a besoin de 15 à 17 kg par jour de matière sèche. Cette quantité est variable en fonction de l'objectif de production et des caractéristiques de l'animal.

L'invention décrit un procédé de détermination d'une complémentation minérale, CM, exprimée en poids par jour pour un animal recevant une ration totale de matière sèche, RTMS, exprimée en poids par jour, procédé dans lequel:
(i) on sélectionne et évalue chacun des paramètres suivants:
   - état sanitaire de l'animal, (ES);
   - potentiel de production de l'animal, (PP);
   - conditions de vie de l'animal, (CV);
   - alimentation de l'animal, (AA);
(ii) on détermine une valeur de besoin en complémentation minérale, VBCM, exprimée en poids par RTMS et par jour en fonction du niveau des paramètres respectifs,
   la VBCM correspondant à ES étant appelée VBCM-ES et étant d'autant plus élevée que l'état sanitaire de l'animal est mauvais;
   la VBCM correspondant à PP étant appelée VBCM-PP et étant d'autant plus élevée que le potentiel de production de l'animal est élevé;
   la VBCM correspondant à CV étant appelée VBCM-CV et étant d'autant plus élevée que les conditions de vie de l'animal sont mauvaises;
   la VBCM correspondant à AA étant appelée VBCM-AA et étant d'autant plus élevée que l'alimentation de l'animal est de mauvaise qualité;
(iii) on additionne les différentes valeurs de besoin en complémentation minérale pour produire un index de complémentation, IC, avec IC = VBCM-ES + VBCM-PP + VBCM-CV + VBCM-AA,
(iv) on détermine la complémentation minérale CM à partir de l'index de complémentation en fonction de la ration totale de matière sèche avec CM = IC × RTMS.

Dans divers modes de mise en oeuvre de la méthode décrite, les moyens suivants utilisés seuls ou selon toutes leurs combinaisons techniquement possibles peuvent être mis en oeuvre:
- les différentes valeurs de besoins en complémentation minérale, VBCM-ES, VBCM-PP, VBCM-CV, VBCM-AA, sont déterminées indépendamment les unes des autres,
- pour un animal d'un troupeau, l'état sanitaire de l'animal est estimé à partir de l'état sanitaire du troupeau;
- pour un animal d'un troupeau, le potentiel de production de l'animal est estimé à partir du potentiel de production du troupeau;
- pour un animal d'un troupeau, les conditions de vie de l'animal sont estimées à partie des conditions de vie du troupeau;
- pour un animal d'un troupeau, l'alimentation de l'animal est estimée à partir de l'alimentation du troupeau;
- pour la détermination des valeurs de besoins en complémentation minérale VBCM-ES, VBCM-PP, VBCM-CV, VBCM-AA, une échelle à trois niveaux est utilisée, lesdits trois niveaux correspondant à:
   pour l'état sanitaire de l'animal, ES:
      - peu de troubles au niveau sanitaire ou reproducteur,
      - quelques troubles à améliorer dans l'année,
      - troubles importants avec améliorations impératives dans l'année,
   pour le potentiel de production de l'animal, PP:
      - moyen mais pas totalement exprimé,
      - élevé mais pouvant être amélioré,
      - très élevé mais pas totalement exprimé par rapport à la génétique du troupeau,
   pour les conditions de vie de l'animal CV:
      - conditions normales pour ce qui concerne les bâtiments, hygiène, traite, chargement, environnement,
      - conditions de chargement élevé ou bâtiments inadaptés ou environnement perturbant,
      - conditions perturbantes pour ce qui est de la traite, des bâtiments, du chargement et de l'environnement,
   et pour l'alimentation de l'animal, AA:
      - naturelle avec herbe, foin, céréales... fourrages de bonne qualité,
      - intensive avec pâture, foin, ensilage, céréales, concentrés, fourrages de bonne qualité.
      - très intensive avec ensilages, concentrés, sous-produits industriels, fourrages de mauvaise qualité,

L'invention concerne également un dispositif pour la mise en oeuvre du procédé précédent qui comporte un dispositif pour la détermination de l'index de complémentation, IC, et un abaque de détermination de la complémentation minérale, CM, à partir de l'index de complémentation, IC.

Dans un premier mode de mise en oeuvre de réalisation dudit dispositif:
ledit dispositif comporte un étui et une languette coulissant dans un étui,
ledit étui comporte au moins cinq fenêtres dont une première série de fenêtres de sélection et une fenêtre d'index,
ladite languette comporte une série de chiffres et au moins un repère pour chacun des paramètres ES, PP, CV, AA,
lesdits repères, lesdits chiffres et lesdites fenêtres étant en relation de telle façon que lorsque les repères sont disposés en face des fenêtres de sélection choisies en fonction des niveaux des paramètres, le chiffre disposé en face de la fenêtre d'index corresponde à IC.

Selon un second mode de réalisation dudit dispositif:
ledit dispositif comporte un étui et pour chacun des paramètres ES, PP, CV, AA, une languette coulissant dans l'étui,
ledit étui comporte pour chacun des paramètres au moins deux fenêtres dont au moins une, fenêtre de sélection et une fenêtre de valeur,
lesdites languettes comportent au moins un repère et une série de chiffres,
ledit repère, lesdits chiffres et lesdites fenêtres étant en relation de telle façon que, pour chaque paramètre, lorsque le repère est disposé en face de la fenêtre de sélection choisie en fonction du niveau du paramètre, le chiffre disposé en face de la fenêtre de valeur corresponde à la valeur de besoin en complémentation minérale, VBCM dudit paramètre.

Le dispositif de l'invention peut encore comprendre les caractéristiques suivantes, considérées isolément ou selon toutes leurs combinaisons techniquement possibles:
- la languette comporte au moins un repère imprimé pour chaque paramètre ES, PP, CV, AA, ledit repère étant une zone de contraste de taille approximativement égale à une fenêtre de sélection;
- la languette comporte pour chaque paramètre ES, PP, CV, AA, au moins autant de repères que de niveaux du paramètre correspondant, lesdits repères étant des descriptions des niveaux du paramètre;
- l'abaque de détermination de la complémentation minérale, CM, à partir de l'index de complémentation, IC comporte un support et un disque mobile en rotation sur ledit support, le disque mobile comportant une découpe en secteur circulaire et une série de chiffres disposés le long du bord de la découpe et correspondant à des valeurs de ration totale de matière sèche, RTMS, en poids par jour pour un animal, le support comportant pour chaque valeur possible de l'index de complémentation IC une série de chiffres disposés radialement et correspondant à des valeurs de complémentation minérale CM, chacun des chiffres RTMS de la série de chiffres du disque mobile étant en relation avec un chiffre CM = IC × RTMS porté par le support.

L'invention concerne également un dispositif pour la mise en oeuvre du procédé précédent qui comporte un moyen informatique pour la détermination de l'index de complémentation, IC, et de la complémentation minérale, M, à partir de l'index de complémentation, IC.

Selon ce mode de réalisation du dispositif: le moyen informatique permet l'entrée des niveaux des paramètres ES, RP, CV, AA, le calcul de chaque VBCM, indépendamment ou non des autres paramètres, l'éventuel affichage de chaque VBCM et de IC, l'entrée de la ration totale de matière sèche, et le calcul et, l'affichage de la complémentation minérale CM. Dans un mode de mise en oeuvre, la ration totale de la matière sèche est déterminée par le moyen informatique à partir des caractéristiques de l'animal.

Ainsi, l'invention permet une détermination d'une complémentation minérale, CM, pour un animal recevant une ration totale de matière sèche, RTMS, et, pour chacun des paramètres suivants: état sanitaire de l'animal, ES; potentiel de production de l'animal, PP; conditions de vie de l'animal. CV; alimentation de l'animal, AA; la détermination d'une valeur de besoin en complémentation minérale, VBCM, en fonction du niveau du paramètre, indépendamment ou non des autres paramètres, les différentes valeurs VBCM étant additionnées pour produire un index de complémentation, IC, la CM étant déterminée avec CM par CM = IC × RTMS.

La présente invention sera illustrée sans être aucunement limitée par des exemples de mise en oeuvre du procédé et du dispositif, en référence aux dessins annexés sur lesquels:
Figure 1 illustre un premier mode de réalisation;
Figure 2 illustre un second mode de réalisation;
Figure 3 représente un abaque;
Figure 4 représente un premier type de languette;
Figure 5 représente un second type de languette;
Figure 6 représente le support de l'abaque de la Figure 3.

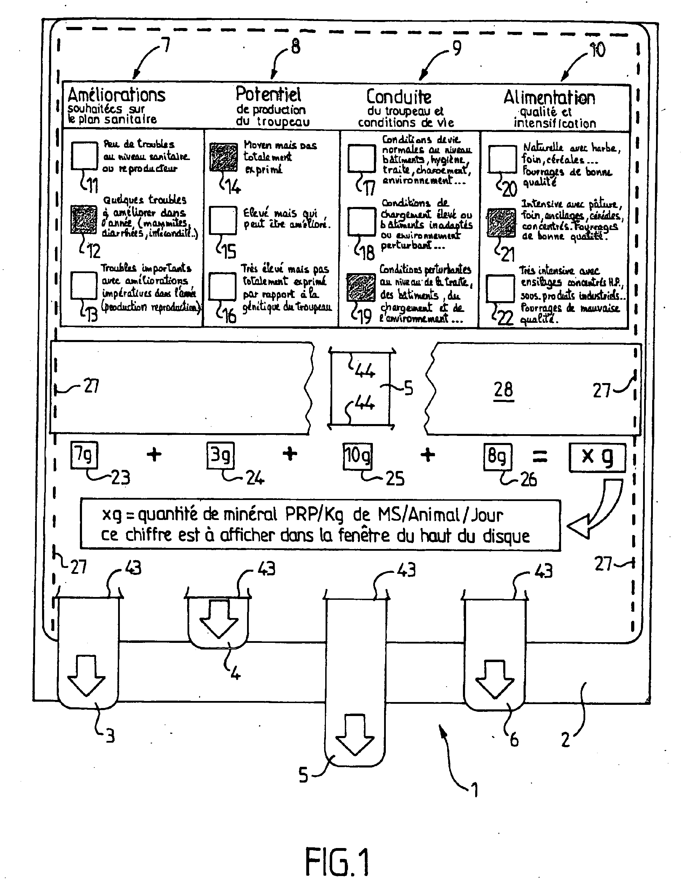

La Figure 1 représente un premier mode de réalisation du dispositif 1 d'évaluation des paramètres. Il comporte un étui 2 dans lequel coulissent quatre languettes 3, 4, 5, 6. Dans cet exemple, l'étui est réalisé par soudage 27 de deux feuilles en matière plastique semi-rigide. Les languettes 3, 4, 5, 6 sont maintenues solidairement en translation dans l'étui 2 par passage alternatif à travers des ouvertures 43 et 44 réalisées â travers un des feuillets de l'étui 2. Pour des raisons esthétiques, une bande de masquage 28 est disposée au niveau de la zone des ouvertures 44. Sur la Figure 1, la bande 28 a été représentée sectionnée en partie afin de visualiser le passage de la languette 5 à travers les ouvertures 44 du feuillet de l'étui 2. La bande 28 est de préférence réalisée dans le même matériau que celui de l'étui et est également fixée par soudage 27. Dans d'autres formes de mise en oeuvre de l'invention, l'étui 2 peut être réalisé différemment et par exemple par pliage d'une feuille puis soudage et/ou agrafage. De même, les languettes peuvent être disposées de manière différente à travers le feuillet de l'étui 2 tout en étant solidaires en translation dudit étui, sans sortir du cadre de l'invention.

Dans ce mode de mise en oeuvre du procédé décrit, les languettes sont indépendantes les unes des autres et à chaque languette correspond un paramètre. La languette 3 correspond au paramètre 7 d'amélioration souhaité sur le plan sanitaire. La languette 4 correspond au paramètre 8 de potentiel de production du troupeau. La languette 5 correspond au paramètre 9 de conduite du troupeau et conditions de vie. La languette 6 correspond au paramètre 10 d'alimentation, qualité et intensification. Pour chacun de ces paramètres 7, 8, 9 et 10, une échelle à trois niveaux a été utilisée. A chacun des niveaux du paramètre correspond une fenêtre de sélection 11 à 22 de niveau de paramètre percée à travers un feuillet de l'étui 2.

Pour le paramètre 7 représentatif de l'amélioration souhaitée sur le plan sanitaire (ou état sanitaire de l'animal), une fenêtre 11 correspond à un niveau 〈〈 peu de trouble au niveau sanitaire ou reproducteur 〉〉 (VBCM= 5g), une fenêtre 12 correspond à 〈〈 quelques troubles à améliorer dans l'année (mammite, diarrhée, infécondité ...) 〉〉 (VBCM= 7g), une fenêtre 13 correspond à 〈〈 troubles importants avec améliorations impératives dans l'année (production, reproduction ...) 〉〉 (VBCM= 9g).

Pour le paramètre 8 représentatif du potentiel de production du troupeau (ou potentiel de production de l'animal), une fenêtre 14 correspond à un niveau 〈〈 moyen mais totalement exprimé 〉〉 (VBCM= 3g), une fenêtre 15 correspond à un niveau 〈〈 élevé mais qui peut être amélioré 〉〉 (VBCM= 5g), une fenêtre 16 correspond à 〈〈 très élevé mais pas totalement exprimé par rapport à la génétique du troupeau 〉〉 (VBCM= 7g).

Pour le paramètre 9 représentatif de la conduite du troupeau et conditions de vie (ou conditions de vie de l'animal), une fenêtre 17 correspond à 〈〈 des conditions de vie normale au niveau bâtiments, hygiène, chargement, environnement 〉〉... (VBCM= 4g), une fenêtre 18 correspond â des 〈〈 conditions de chargement élevé ou bâtiments inadaptés, ou environnement perturbant 〉〉 ... (VBCM= 7g), une fenêtre 19 correspond â des 〈〈 conditions perturbantes au niveau de la traite, des bâtiments, des chargements et de l'environnement 〉〉 ... (VBCM= 10g).

Pour le paramètre 10 représentatif de l'alimentation, qualité et intensification (ou alimentation de l'animal), une fenêtre 20 correspond â une 〈〈 alimentation naturelle avec herbe, foin, céréales ..., fourrage de bonne qualité 〉〉 (VBCM= 3g), une fenêtre 21 correspond à une 〈〈 alimentation intensive avec pâture, foin, ensilage, céréales, concentrés, fourrages de bonne qualité 〉〉 (VBCM= 8g), une fenêtre 22 correspond à une alimentation 〈〈 très intensive avec ensilages, concentré H.P., sous-produits industriels ..., fourrages de mauvaise qualité 〉〉 (VBCM= 14g).

Des fenêtres de valeur 23, 24, 25, 26, sont percées â travers un feuillet de l'étui 2 et permettent l'affichage des valeurs de besoin en complémentation minérale, VBCM, correspondant à chacun des niveaux des paramètres. Dans ce mode de mise en oeuvre de l'invention, l'index de complémentation, IC, est obtenu par l'addition des VBCM correspondant à chacun des paramètres et les valeurs affichées dans chacune des fenêtres de valeur 23, 24, 25, 26, sont indépendantes les unes des autres en ce sens que les quatre languettes 3, 4, 5, 6, sont indépendantes et peuvent être manoeuvrées indépendamment les unes des autres. Ce mode de mise en oeuvre permet de se rendre compte de l'impact de chaque paramètre sur les besoins en complémentation et permet ainsi, en plus de la détermination de la complémentation, de connaître le ou les paramètres sur lesquels il faut jouer pour diminuer les besoins.

Des instructions d'utilisation du dispositif sont de préférence imprimées sur le feuillet comportant les fenêtres de sélection et de valeur.

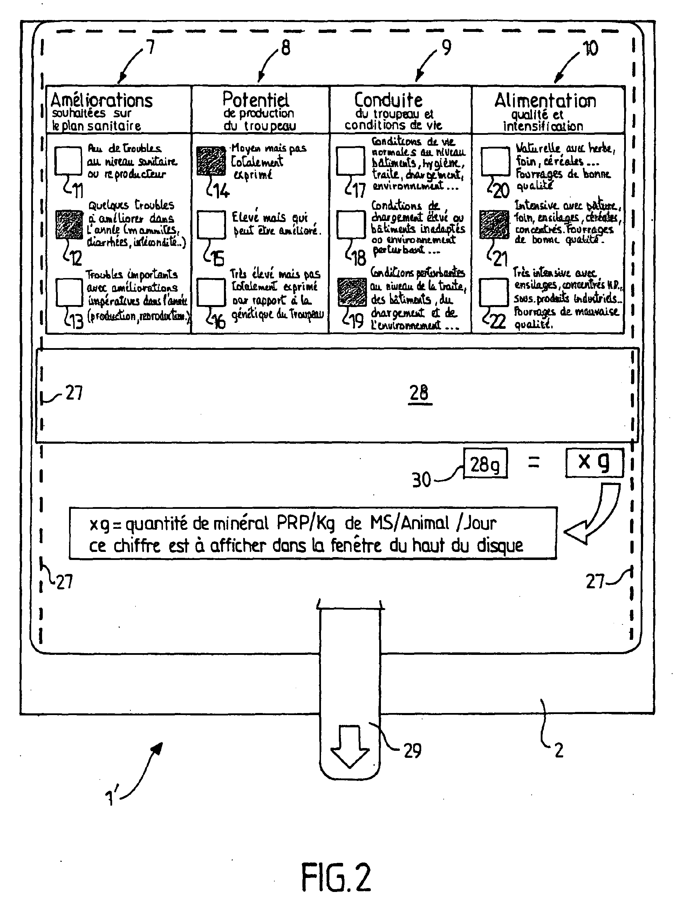

La Figure 2 représente une variante 1' de réalisation d'un dispositif dans lequel l'index de complémentation, IC, est obtenu directement en fonction de la sélection des niveaux des paramètres 7, 8, 9, 10 par lecture d'un chiffre à travers une fenêtre d'index 30. A cette fin, une seule languette 29 est disposée dans l'étui et est manoeuvrée. Dans ce dispositif, les différentes valeurs de besoin en complémentation minérale, VBCM, correspondant à chacun des paramètres et servant à calculer l'index IC peuvent être, mais pas obligatoirement, liées entre elles. En d'autres termes, une valeur particulière d'un paramètre peut avoir une influence sur le VBCM des autres paramètres contrairement au dispositif précédent de la Figure 1 où chacune des VBCM est déterminée indépendamment des autres. Dans l'exemple de la figure 2, les différentes VBCM ne sont pas affichées et seulement le résultat de leur addition, IC, l'est. Dans d'autres formes de mise en oeuvre, les différentes VBCM pourront aussi être affichées, comme sur la figure 1 à travers des fenêtres de valeur, en plus de IC, afin de visualiser les effets respectifs des paramètres. Le dispositif de la Figure 2 permet de déterminer un index de complémentation, IC, en tenant compte des dépendances éventuelles entre les paramètres. On prévoira en conséquence sur la languette toutes les combinaisons possibles des niveaux des paramètres ainsi que le résultat VBCM-ES + VBCM-PP + VBCM-CV + VBCM-AA. Etant donné le nombre de combinaisons, on préfère utiliser des repères contrastés de petite taille plutôt que des repères sous forme de textes correspondant à chaque niveau de paramètre. Dans une version où l'interaction entre les paramètres n'est pas prise en compte, on peut utiliser les valeurs de VBCM données dans le dispositif de la figure 1.

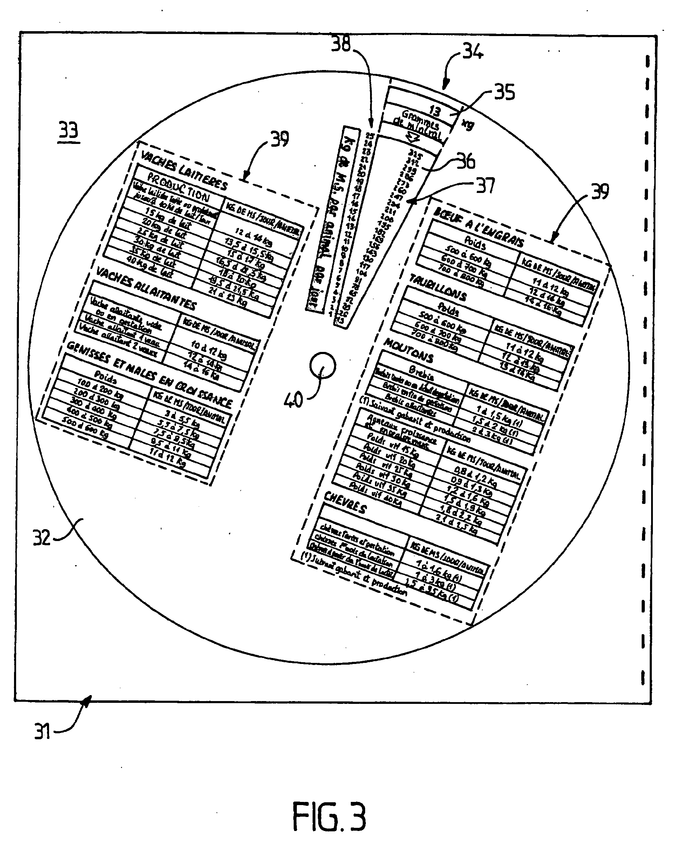

La Figure 3 représente un abaque 31 du type disque 32 mobile en rotation autour d'un centre 40 sur un support fixe 33. Le disque 32 est découpé pour former un secteur 34 ouvert par deux fenêtres, une première fenêtre 35 correspondant â une valeur d'index de complémentation, IC, déterminée à l'étape précédente et à l'aide d'un des dispositifs des Figures 1 et 2 et une seconde fenêtre 36 pour la valeur de complémentation minérale 37. L'abaque 31 permet de déterminer la complémentation minérale, CM, en grammes par jour pour un animal en fonction de l'index de complémentation, fenêtre 35, IC, exprimé en gramme par ration totale de matière sèche par jour par animal et en fonction de la ration totale de matière sèche 38, RTMS, ingérée par l'animal par jour. L'index de complémentation, IC, est exprimé en g par kg de matière sèche ingérée par animal par jour. La ration totale de matière sèche ingérée, RTMS, par animal par jour est exprimée en kg. Le résultat du produit de IC par RTMS permet d'obtenir le poids de complémentation minérale, CM en grammes.

Des instructions et/ou informations complémentaires du type de quantités de matière sèche ingérée par animal et par jour peuvent être imprimées sur le disque mobile 32, par exemple dans des zones d'informations 39.

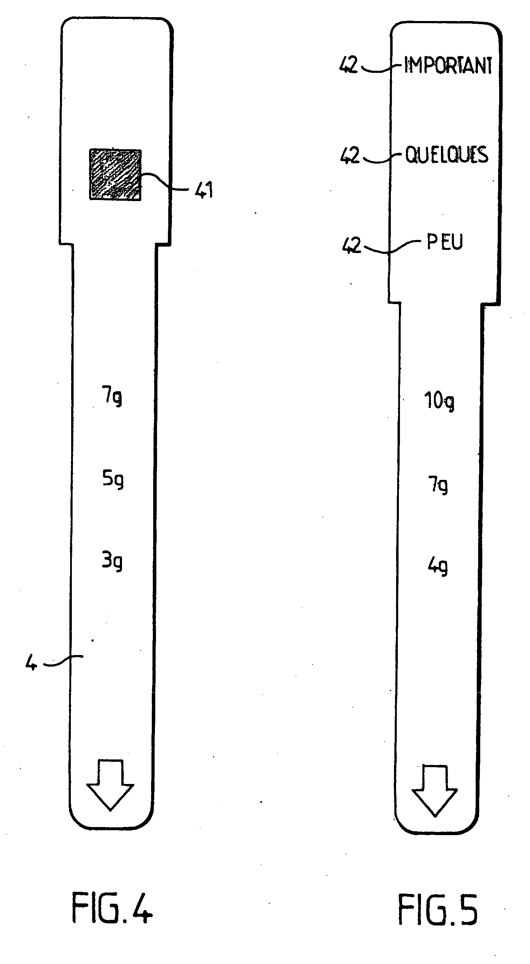

La Figure 4 représente une languette utilisable dans le dispositif de la Figure 1 et plus particulièrement la languette 4. Dans ce mode de réalisation, la languette comporte un seul repère contrasté 41 et une série de chiffres de VBCM correspondant aux différents niveaux du paramètre 8.

La Figure 5 représente une variante de languette dans laquelle plusieurs repères contrastés 42 correspondant à chacun des niveaux du paramètre correspondant sont imprimés. La languette de la figure 5 peut ainsi être utilisée pour le paramètre 7. En cas d'utilisation d'une telle languette, une seule fenêtre de sélection sera prévue par paramètre. Une languette du type utilisable dans le dispositif de la Figure 2 n'a pas été représentée. Cependant elle peut comporter des repères selon les deux modes précédemment décrits, c'est-à-dire des repères contrastés du type 41 par paramètre et/ou des repères du type 42.

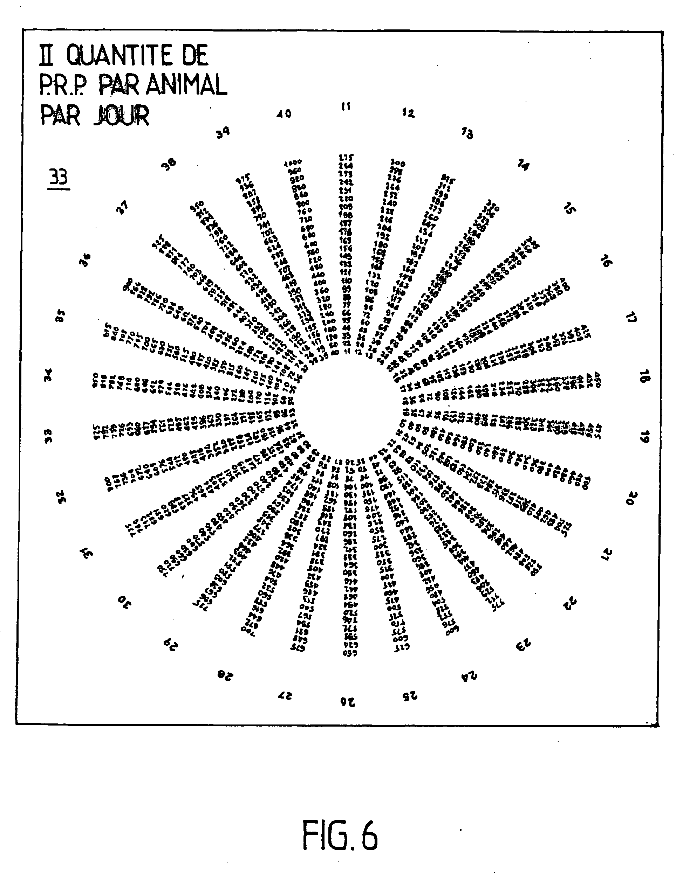

La Figure 6 représente le support de l'abaque 31, correspondant au support fixe 33, le disque mobile 32 ayant été retiré. Sur ledit support 33 sont imprimées radialement les différentes valeurs possibles de complémentation minérale, CM, en fonction de IC.

Les valeurs de VBCM ou IC données dans les exemples de mise en oeuvre sont approximatives et non limitatives.

Dans d'autres formes de mise en oeuvre du procédé décrit, d'autres types de matériaux que du plastique et/ou combinaisons de matériaux peuvent être utilisés pour l'étui 2, les languettes 3, 4, 5, 6, 29,. Du carton peut, par exemple, être utilisé. Dans des variantes, le soudage 27 des éléments peut être remplacé par un collage et/ou un agrafage ou tout autre type de moyen permettant de solidariser les éléments de l'étui entre eux.

Enfin, le procédé décrit peut être mis en oeuvre dans un appareil informatique permettant l'entrée des niveaux des paramètres, le calcul de chaque VBCM (indépendamment ou non des autres paramètres), l'éventuel affichage des VBCM, l'entrée de la ration totale de matière sèche ou d'une manière équivalente des caractéristiques de l'animal permettant de déterminer cette ration totale de matière sèche, et le calcul et l'affichage de CM.

## Revendications

1. Système destiné à la mise en oeuvre d'un procédé de détermination d'une complémentation minérale pour l'alimentation d'un animal recevant une ration alimentaire,
**caractérisé en ce qu'**il comporte des moyens tels que pour une complémentation minérale, CM, exprimée en poids par jour et une ration alimentaire qui est une ration totale de matière sèche, RTMS, exprimée en poids par jour, lesdits moyens permettent la détermination d'un index de complémentation, IC, à partir duquel la complémentation minérale, CM, est déterminée, la complémentation minérale résultant :
(i) d'une sélection et évaluation de chacun des paramètres suivants:
• état sanitaire de l'animal, ES,
• potentiel de production de l'animal, PP,
• conditions de vie de l'animal, CV,
• alimentation de l'animal, AA;
(ii) d'une détermination d'une valeur de besoin en complémentation minérale, VBCM, exprimée en poids par RTMS et par jour en fonction du niveau des paramètres respectifs,
la VBCM correspondant à ES étant appelée VBCM-ES et étant d'autant plus élevée que l'état sanitaire de l'animal est mauvais;
la VBCM correspondant à PP étant appelée VBCM-PP et étant d'autant plus élevée que le potentiel de production de l'animal est élevé;
la VBCM correspondant à CV étant appelée VBCM-CV et étant d'autant plus élevée que les conditions de vie de l'animal sont mauvaises;
la VBCM correspondant à AA étant appelée VBCM-AA et étant d'autant plus élevée que l'alimentation de l'animal est de mauvaise qualité;
(iii) de l'addition des différentes valeurs de besoin en complémentation minérale pour produire un index de complémentation, IC, soit IC = VBCM-ES + VBCM-PP + VBCM-CV + VBCM-AA,
(iv) et la détermination de la complémentation minérale CM à partir de l'index de complémentation en fonction de la ration totale de matière sèche avec CM = IC x RTMS,
le système comportant, d'une part, un dispositif (1) (1') de détermination de l'index de complémentation, IC, et, d'autre part, un abaque (31) de détermination de la complémentation minérale, CM, à partir de l'index de complémentation, IC,
ledit dispositif (1) (1') comportant un étui et au moins une languette (3) (4) (5) (6) (29) coulissant dans l'étui (2),
ledit étui comportant un ensemble de fenêtres dont, d'une part, une série de fenêtres de sélection (11 à 22) et, d'autre part, une fenêtre d'index (30) et/ou une série de fenêtre de valeur (23) (24) (25) (26),
la ou les languettes comportant une série de chiffres et au moins un repère (41, 42) pour chacun des paramètres ES, PP, CV, AA, le/lesdits repères, lesdits chiffres et lesdites fenêtres étant en relation de façon à ce que lorsque le/les repères est/sont disposés en face de la/des fenêtres de sélection choisie(s) en fonction du niveau du/des paramètres, le chiffre disposé en face de la fenêtre d'index corresponde à IC et/ou le chiffre disposé en face de la fenêtre de valeur corresponde à la valeur de besoin en complémentation minérale, VBCM, du paramètre correspondant.

2. Système selon la revendication 1, **caractérisé en ce que** le dispositif (1') de détermination de l'index de complémentation comporte une languette (29) et un étui (2) avec au moins cinq fenêtres dont une première série de fenêtres de sélection (11 à 22) et une fenêtre d'index (30), ladite languette comportant une série de chiffres et au moins un repère (41, 42) pour chacun des paramètres ES, PP, CV, AA, lesdits repères, lesdits chiffres et lesdites fenêtres étant en relation de telle façon que lorsque les repères sont disposés en face des fenêtres de sélection choisies en fonction des niveaux des paramètres, le chiffre disposé en face de la fenêtre d'index corresponde à IC.

3. Système selon la revendication 1, **caractérisé en ce que** le dispositif (1) de détermination de l'index de complémentation comporte un étui (2) et pour chacun des paramètres ES, PP, CV, AA, une languette (3, 4, 5, 6) coulissant dans l'étui (2), ledit étui comportant pour chacun des paramètres (7) (8) (9) (10) au moins deux fenêtres dont au moins une fenêtre de sélection (11, 12, 13) (14, 15, 16) (17, 18, 19) (20, 21, 22) et une fenêtre de valeur (23) (24) (25) (26), lesdites languettes comportant au moins un repère (41, 42) et une série de chiffres, ledit repère, lesdits chiffres et lesdites fenêtres étant en relation de telle façon que, pour chaque paramètre, lorsque le repère est disposé en face de la fenêtre de sélection choisie en fonction du niveau du paramètre, le chiffre disposé en face de la fenêtre de valeur corresponde à la valeur de besoin en complémentation minérale, VBCM, dudit paramètre.

4. Système selon la revendication 1, 2 ou 3, **caractérisé en ce que** la/les languettes comportent au moins un repère (41) imprimé pour chaque paramètre ES, PP, CV, AA, ledit repère étant une zone de contraste de taille approximativement égale à la fenêtre de sélection.

5. Système selon la revendication 1, 2 ou 3 **caractérisé en ce que** la/les languettes comportent pour chaque paramètre ES, PP, CV, AA, au moins autant de repères (42) que de niveaux du paramètre correspondant, lesdits repères étant des descriptions des niveaux du paramètre.

6. Système selon l'une quelconque des revendications 1 à 5 **caractérisé en ce que** l'abaque (31) de détermination de la complémentation minérale, CM, à partir de l'index de complémentation, IC comporte un support (33) et un disque mobile (32) en rotation sur ledit support, le disque mobile comportant une découpe (34, 35, 36) en secteur circulaire et une série de chiffres (38) disposés latéralement le long du bord de la découpe et correspondant à des valeurs de ration totale de matière sèche, RTMS, en poids par jour pour un animal, le support comportant pour chaque valeur possible de l'index de complémentation IC une série de chiffres disposés radialement et correspondant à des valeurs de complémentation minérale, CM, (37) chacun des chiffres RTMS de la série de chiffres du disque mobile étant en relation avec un chiffre CM = IC x RTMS porté par le support (33).

7. Système selon l'une quelconque des revendications précédentes, **caractérisé en ce que** les différentes valeurs de besoin en complémentation minérale, VBCM-ES, VBCM-PP, VBCM-CV, VBCM-AA, sont déterminées indépendamment les unes des autres.

8. Système selon l'une quelconque des revendications précédentes, **caractérisé en ce que** pour au moins un des paramètres concernant un animal donné du troupeau, ledit paramètre dudit animal est estimé à partir du même paramètre concernant le troupeau.

9. Système selon l'une quelconque des revendications précédentes, **caractérisé en ce que** pour la détermination des valeurs de besoin en complémentation minérale VBCM-ES, VBCM-PP, VBCM-CV, VBCM-AA, une échelle à trois niveaux est utilisée, lesdits trois niveaux correspondant à:
pour l'état sanitaire de l'animal, ES:
• peu de troubles au niveau sanitaire ou reproducteur,
• quelques troubles à améliorer dans l'année,
• troubles importants avec améliorations impératives dans l'année, pour le potentiel de production de l'animal, PP:
• moyen mais pas totalement exprimé,
• élevé mais pouvant être amélioré,
• très élevé mais pas totalement exprimé par rapport à la génétique du troupeau,
pour les conditions de vie de l'animal, CV:
• conditions normales pour ce qui concerne les bâtiments, hygiène, traite, chargement, environnement,
• conditions de chargement élevé ou bâtiments inadaptés ou environnement perturbant,
- conditions perturbantes pour ce qui est de la traite, des bâtiments, du chargement et de l'environnement,
et pour l'alimentation de l'animal, AA:
• naturelle avec herbe, foin, céréales... fourrages de bonne qualité,
• intensive avec pâture, foin, ensilage, céréales, concentrés, fourrages de bonne qualité,
• très intensive avec ensilages, concentrés, sous-produits industriels, fourrages de mauvaise qualité.

10. Système destiné à la mise en oeuvre d'un procédé de détermination d'une complémentation minérale pour l'alimentation d'un animal recevant une ration alimentaire,
**caractérisé en ce qu'**il comporte des moyens tels que pour une complémentation minérale, CM, exprimée en poids par jour et une ration alimentaire qui est une ration totale de matière sèche, RTMS, exprimée en poids par jour, lesdits moyens permettent la détermination d'un index de complémentation, IC, à partir duquel la complémentation minérale, CM, est déterminée, la complémentation minérale résultant :
(i) d'une sélection et évaluation de chacun des paramètres suivants:
• état sanitaire de l'animal, ES,
• potentiel de production de l'animal, PP,
• conditions de vie de l'animal, CV,
• alimentation de l'animal, AA;
(ii) d'une détermination d'une valeur de besoin en complémentation minérale, VBCM, exprimée en poids par RTMS et par jour en fonction du niveau des paramètres respectifs,
la VBCM correspondant à ES étant appelée VBCM-ES et étant d'autant plus élevée que l'état sanitaire de l'animal est mauvais; la VBCM correspondant à PP étant appelée VBCM-PP et étant d'autant plus élevée que le potentiel de production de l'animal est élevé;
la VBCM correspondant à CV étant appelée VBCM-CV et étant d'autant plus élevée que les conditions de vie de l'animal sont mauvaises;
la VBCM correspondant à AA étant appelée VBCM-AA et étant d'autant plus élevée que l'alimentation de l'animal est de mauvaise qualité;
(iii) de l'addition des différentes valeurs de besoin en complémentation minérale pour produire un index de complémentation, IC, soit IC = VBCM-ES + VBCM-PP + VBCM-CV + VBCM-AA,
(iv) et la détermination de la complémentation minérale CM à partir de l'index de complémentation en fonction de la ration totale de matière sèche avec CM = IC x RTMS,
le système comportant un moyen informatique pour la détermination de l'index de complémentation, IC, et de la complémentation minérale, CM, à partir de l'index de complémentation IC, le moyen informatique permettant l'entrée des niveaux des paramètres, FS, PP, CV, AA, le calcul de chaque VBCM, indépendamment ou non des autres paramètres, l'éventuel affichage de chaque VBCM et de IC, l'entrée de la ration totale de matière sèche et le calcul et l'affichage de la complémentation minérale CM.

11. Système selon la revendication 10, **caractérisé en ce que** la ration totale de matière sèche est déterminée par le moyen informatique à partir des caractéristiques de l'animal.

12. Système selon la revendication 10 ou 1 1 , **caractérisé en ce que** les différentes valeurs de besoin en complémentation minérale, VBCM-ES, VBCM-PP, VBCM-CV, VBCM-AA, sont calculées indépendamment les unes des autres.

13. Système selon l'une quelconque des revendications 10 à 12, **caractérisé en ce que** pour au moins un des paramètres concernant un animal donné du troupeau, ledit paramètre dudit animal est estimé à partir du même paramètre concernant le troupeau.

14. Système selon l'une quelconque des revendications 10 à 13, **caractérisé en ce que** pour la détermination des valeurs de besoin en complémentation minérale VBCM-ES, VBCM-PP, VBCM-CV, VBCM-AA, une échelle à trois niveaux est utilisée, lesdits trois niveaux correspondant à:
pour l'état sanitaire de l'animal, ES:
• peu de troubles au niveau sanitaire ou reproducteur,
• quelques troubles à améliorer dans l'année,
• troubles importants avec améliorations impératives dans l'année, pour le potentiel de production de l'animal, PP:
• moyen mais pas totalement exprimé,
• élevé mais pouvant être amélioré,
• très élevé mais pas totalement exprimé par rapport à la génétique du troupeau,
pour les conditions de vie de l'animal, CV:
• conditions normales pour ce qui concerne les bâtiments, hygiène, traite, chargement, environnement,
• conditions de chargement élevé ou bâtiments inadaptés ou environnement perturbant,
- conditions perturbantes pour ce qui est de la traite, des bâtiments, du chargement et de l'environnement,
et pour l'alimentation de l'animal, AA:
• naturelle avec herbe, foin, céréales... fourrages de bonne qualité,
• intensive avec pâture, foin, ensilage, céréales, concentrés, fourrages de bonne qualité,
• très intensive avec ensilages, concentrés, sous-produits industriels, fourrages de mauvaise qualité.

## Claims

1. A system for carrying out a process for determining a mineral feed supplementation for an animal receiving a feed intake,
**characterized in that** the system comprises means such that, for a mineral supplementation, CM, expressed in weight per day, and a feed intake which is a total dry matter intake, RTMS, expressed in weight per day, said means allow determination of a supplementation index, IC, from which the mineral supplementation CM is determined, the mineral supplementation resulting from:
(i) selecting and evaluating each of the following parameters:
- sanitary condition of the animal, ES,
- production potential of the animal, PP,
- life conditions of the animal, CV,
- feed of the animal, AA;
(ii) determining a value of mineral supplementation need, VBCM, expressed in weight per RTMS and per day, as a function of the level of the respective parameters,
the VBCM value corresponding to ES being called VBCM-ES and being all the more higher as the sanitary condition of the animal is bad;
the VBCM value corresponding to PP being called VBCM-PP and being all the more higher as the production potential of the animal is high;
the VBCM value corresponding to CV being called VBCM-CV and being all the more higher as the life conditions of the animal are bad;
the VBCM value corresponding to AA being called VBCM-AA and being all the more higher as the quality of the animal feed is bad;
(iii) adding the different values of mineral supplementation need to produce a supplementation index, IC, namely IC = VBCM-ES + VBCM-PP + VBCM-CV + VBCM-AA,
(iv) and determining the mineral supplementation CM from the supplementation index as a function of the total dry matter intake, with CM = IC x RTMS,
the system comprising, on the one hand, a device (1) (1') for determining the supplementation index, IC, and on the other hand, an abacus (31) for determining the mineral supplementation CM from the supplementation index IC,
said device (1) (1') comprising a sleeve and at least one tab (3) (4) (5) (6) (29) sliding inside the sleeve (2),
said sleeve comprising a collection of windows among which are, on the one hand, a series of selection windows (11 to 22) and, on the other hand, an index window (30) and/or a series of value windows (23) (24) (25) (26),
the tab(s) comprising a series of figures and at least one mark (41, 42) for each of the parameters ES, PP, CV, AA, said mark(s), said figures and said windows being related together so that, when the mark(s) is(are) aligned with the selection window(s) chosen as a function of the level of the parameter(s), the figure aligned with the index window corresponds to IC and/or the figure aligned with the value window corresponds to the value of mineral supplementation need VBCM of the corresponding parameter.

2. A system according to claim 1, **characterized in that** the device (1') for determining the supplementation index comprises a tab (29) and a sleeve (2) with at least five windows among which are a first series of selection windows (11 to 22) and an index window (30), said tab comprising a series of figures and at least one mark (41, 42) for each of the parameters ES, PP, CV, AA, said marks, said figures and said windows being related together so that, when the marks are aligned with selection windows chosen as a function of the levels of the parameters, the figure aligned with the index window corresponds to IC.

3. A system according to claim 1, **characterized in that** the device (1) for determining the supplementation index comprises a sleeve (2) and, for each of the parameters ES, PP, CV, AA, a tab (3, 4, 5, 6) sliding inside the sleeve (2), said sleeve comprising, for each of the parameters (7) (8) (9) (10), at least two windows among which are at least one selection window (11, 12, 13) (14, 15, 16) (17, 18, 19) (20, 21, 22) and one value window (23) (24) (25) (26), said tabs comprising at least one mark (41, 42) and a series of figures, said mark, said figures and said windows being related together so that, for each parameter, when the mark is aligned with the selection window chosen as a function of the parameter level, the figure aligned with the value window corresponds to the value of mineral supplementation need VBCM of said parameter.

4. A system according to claim 1, 2 or 3, **characterized in that** the tab(s) comprise at least one mark (41) printed for each parameter ES, PP, CV, AA, said mark being a contrast area whose size is approximately equal to that of the selection window.

5. A system according to claim 1, 2 or 3, **characterized in that** the tab(s) comprise, for each parameter ES, PP, CV, AA, at least as many marks (42) as there are levels of the corresponding parameter, said marks being descriptions of the parameter levels.

6. A system according to any one of claims 1 to 5, **characterized in that** the abacus (31) for determining the mineral supplementation CM from the supplementation index IC comprises a support (33) and a disc (32) mobile in rotation on said support, the mobile disc comprising a circular-sector-shaped cut (34, 35, 36) and a series of figures (38) arranged laterally along the edge of the cut and corresponding to values of total dry matter intake RTMS, in weight per day for one animal, the support comprising, for each possible value of the supplementation index IC, a series of figures arranged radially and corresponding to values of mineral supplementation CM (37), each of the figures RTMS of the series of figures of the mobile disk being related to a figure CM = IC x RTMS written on the support (33).

7. A system according to any one of the preceding claims, **characterized in that** the different values of mineral supplementation need, VBCM-ES, VBCM-PP, VBCM-CV, VBCM-AA, are determined independently from one another.

8. A system according to any one of the preceding claims, **characterized in that,** for at least one of the parameters concerning a given animal of the herd, said parameter of said animal is estimated from the same parameter concerning the herd.

9. A system according to any one of the preceding claims, **characterized in that,** for determining the values of mineral supplementation need VBCM-ES, VBCM-PP, VBCM-CV, VBCM-AA, a three-level scale is used, said three levels corresponding to:
- for the sanitary condition of the animal, ES:
• few disorders at the sanitary level or reproductive capacity level,
• some disorders to be improved within the year,
• important disorders with imperative improvements within the year,
- for the production potential of the animal, PP:
• medium but not fully expressed,
• high but improvable,
• very high but not fully expressed with respect to the herd genetics,
- for the life conditions of the animal, CV:
• normal conditions regarding buildings, sanitation, milking, stocking, environment,
• conditions of high stocking or unsuited buildings or disturbing environment
• disturbing conditions regarding milking, buildings, stocking and environment, and
- for the feed of the animal, AA:
• natural with grass, hay, cereals... high quality fodders,
• intensive with pasture, hay, silage, cereals, concentrates, high quality fodders,
• very intensive with silage, concentrates, industrial by-products, low quality fodders.

10. A system for carrying out a process for determining a mineral feed supplementation for an animal receiving a feed intake, **characterized in that** the system comprises means such that, for a mineral supplementation, CM, expressed in weight per day, and a feed intake which is a total dry matter intake, RTMS, expressed in weight per day, said means allow determination of a supplementation index, IC, from which the mineral supplementation CM is determined, the mineral supplementation resulting from:
(i) selecting and evaluating each of the following parameters:
- sanitary condition of the animal, ES,
- production potential of the animal, PP,
- life conditions of the animal, CV,
- feed of the animal, AA;
(ii) determining a value of mineral supplementation need, VBCM, expressed in weight per RTMS and per day, as a function of the level of the respective parameters,
the VBCM value corresponding to ES being called VBCM-ES and being all the more higher as the sanitary condition of the animal is bad;
the VBCM value corresponding to PP being called VBCM-PP and being all the more higher as the production potential of the animal is high;
the VBCM value corresponding to CV being called VBCM-CV and being all the more higher as the life conditions of the animal are bad; the VBCM value corresponding to AA being called VBCM-AA and being all the more higher as the quality of the animal feed is bad;
(iii) adding the different values of mineral supplementation need to produce a supplementation index, IC, namely IC = VBCM-ES + VBCM-PP + VBCM-CV + VBCM-AA,
(iv) and determining the mineral supplementation CM from the supplementation index as a function of the total dry matter intake, with CM = IC x RTMS,
the system comprising an computer means for determining the supplementation index IC and the mineral supplementation CM from the supplementation index IC, wherein the computer means allows input of the levels of the parameters ES, PP, CV, AA, calculation of each VBCM, independently or not of the other parameters, possible display of each VBCM and of IC, input of the total dry matter intake, and calculation and display of the mineral supplementation CM.

11. A system according to claim 10, **characterized in that** the total dry matter intake is determined by the computer means from the animal characteristics.

12. A system according to claim 10 or 11, **characterized in that** the different values of mineral supplementation need VBCM-ES, VBCM-PP, VBCM-CV, VBCM-AA, are calculated independently from one another.

13. A system according to any one of claims 10 to 12, **characterized in that,** for at least one of the parameters concerning a given animal of the herd, said parameter of said animal is estimated from the same parameter concerning the herd.

14. A system according to any one of claims 10 to 13, **characterized in that,** for determining the values of mineral supplementation need VBCM-ES, VBCM-PP, VBCM-CV, VBCM-AA, a three-level scale is used, said three levels corresponding to:
- for the sanitary condition of the animal, ES:
• few disorders at the sanitary level or reproductive capacity level,
• some disorders to be improved within the year,
• important disorders with imperative improvements within the year,
- for the production potential of the animal, PP:
• medium but not fully expressed,
• high but improvable,
• very high but not fully expressed with respect to the herd genetics,
- for the life conditions of the animal, CV:
• normal conditions regarding buildings, sanitation, milking, stocking, environment,
• conditions of high stocking or unsuited buildings or disturbing environment
• disturbing conditions regarding milking, buildings, stocking and environment, and
- for the feed of the animal, CV:
• natural with grass, hay, cereals... high quality fodders,
• intensive with pasture, hay, silage, cereals, concentrates, high quality fodders,
• very intensive with silage, concentrates, industrial by-products, low quality fodders.

## Patentansprüche

1. System zur Durchführung eines Verfahrens zur Bestimmung eines mineralischen Futterzusatzes zur Ernährung eines Tieres, das eine Futterration erhält,
**dadurch gekennzeichnet, dass** es Einrichtungen für einen in Gewicht pro Tag ausgedrückten mineralischen Futterzusatz, CM, und für eine in Gewicht pro Tag ausgedrückte Futterration, bei welcher es sich um eine Trockenmasse-Gesamtration, RTMS, handelt, aufweist, wobei die Einrichtungen die Bestimmung eines Zusatz-Index, IC, ermöglichen, auf dessen Basis der mineralische Futterzusatz, CM, ermittelt wird, wobei sich der mineralische Futterzusatz ergibt aus:
(i) einer Auswahl und Auswertung jedes der folgenden Parameter:
• Gesundheitszustand des Tiers, ES,
• Produktionspotential des Tiers, PP,
• Lebensbedingungen des Tiers, CV,
• Ernährung des Tiers, AA;
(ii) einer Bestimmung eines Bedarfswerts an mineralischem Futterzusatz, VBCM, ausgedrückt in Gewicht pro RTMS und pro Tag in Abhängigkeit vom Wert der jeweiligen Parameter,
wobei der dem ES entsprechende VBCM als VBCM-ES bezeichnet wird und umso größer ist, je schlechter der Gesundheitszustand des Tieres ist;
wobei der dem PP entsprechende VBCM als VBCM-PP bezeichnet wird und umso größer ist, je größer das Produktionspotential des Tieres ist;
wobei der den CV entsprechende VBCM als VBCM-CV bezeichnet wird und umso größer ist, je schlechter die Lebensbedingungen des Tiers sind;
wobei der der AA entsprechende VBCM als VBCM-AA bezeichnet wird und umso größer ist, je schlechter die Qualität der Ernährung des Tieres ist;
(iii) der Addition der unterschiedlichen Werte des Bedarfs an mineralischem Futterzusatz zur Erzeugung eines Zusatz-Index, IC, nämlich IC = VBCM-ES + VBCM-PP + VBCM-CV + VBCM-AA,
(iv) und der Bestimmung des mineralischen Futterzusatzes auf der Basis des Zusatz-Index in Abhängigkeit von der Trockenmasse-Gesamtration durch CM = IC x RTMS,
wobei das System einerseits eine Vorrichtung (1) (1') zur Bestimmung des Zusatz-Index, IC, und andererseits einen Abakus (31) zur Bestimmung des mineralischen Futterzusatzes, CM, auf der Basis des Zusatz-Index, IC, aufweist,
wobei die Vorrichtung (1) (1') eine Hülle und mindestens eine Zunge (3) (4) (5) (6) (29) aufweist, welche in der Hülle (2) gleitet,
wobei die Hülle eine Fensteranordnung aufweist, nämlich einerseits eine Reihe von Auswählfenstern (11 bis 22) und andererseits ein Indexfenster (30) und/oder eine Reihe von Wertefenstern (23) (24) (25) (26),
wobei die Zunge oder die Zungen eine Reihe von Zahlen und mindestens eine Markierung (41, 42) für jeden der Parameter ES, PP, CV, AA aufweist/-en,
wobei die Markierung/-en, die Zahlen und die Fenster derart in Beziehung zueinander stehen, dass, wenn die Markierung/-en gegenüber dem/den in Abhängigkeit von dem Wert der/des Parameter/-s gewählten Auswählfenster/-n angeordnet ist/sind, die dem Indexfenster gegenüberliegend angeordnete Zahl dem IC entspricht und/oder die dem Wertefenster gegenüberliegend angeordnete Zahl dem Wert des Bedarfs an mineralischem Futterzusatz, VBCM, des entsprechenden Parameters entspricht.

2. System nach Anspruch 1, **dadurch gekennzeichnet, dass** die Vorrichtung (1') zur Bestimmung des Zusatz-Index eine Zunge (29) und eine Hülle (2) mit mindestens fünf Fenstern aufweist, bei welchen es sich um eine erste Reihe von Auswählfenstern (11 bis 22) und ein Indexfenster (30) handelt, wobei die Zunge eine Reihe von Zahlen und mindestens eine Markierung (41, 42) für jeden der Parameter ES, PP, CV, AA aufweist, wobei die Markierungen, die Zahlen und die Fenster derart miteinander in Beziehung stehen, dass, wenn die Markierungen den in Abhängigkeit von den Werten der Parameter gewählten Auswählfenstern gegenüberliegend angeordnet sind, die dem Indexfenster gegenüberliegende Zahl dem IC entspricht.

3. System nach Anspruch 1, **dadurch gekennzeichnet, dass** die Vorrichtung (1) zur Bestimmung des Zusatz-Index eine Hülle (2) und für jeden der Parameter ES, PP, CV. AA eine Zunge (3, 4, 5, 6) aufweist, welche in der Hülle (2) gleitet, wobei die Hülle für jeden der Parameter (7) (8) (9) (10) mindestens zwei Fenster aufweist, bei denen es sich um mindestens ein Auswählfenster (11, 12, 13) (14, 15, 16) (17, 18, 19) (20, 21, 22) und ein Wertefenster (23) (24) (25) (26) handelt, wobei die Zungen mindestens eine Markierung (41, 42) und eine Reihe von Zahlen aufweisen, wobei die Markierung, die Zahlen und die Fenster derart miteinander in Beziehung stehen, dass, wenn die Markierung dem in Abhängigkeit von den Werten der Parameter gewählten Auswählfenster gegenüberliegend angeordnet ist, die dem Wertefenster gegenüberliegende Zahl dem Parameter-Wert des Bedarfs an mineralischem Futterzusatz, VBCM, entspricht.

4. System nach Anspruch 1, 2,oder 3, **dadurch gekennzeichnet, dass** die Zunge/-n mindestes eine gedruckte Markierung (41) für jeden Parameter ES, PP, CV, AA aufweist/-en, wobei die Markierung ein Kontrastbereich mit einer Größe ist, die ungefähr gleich dem Auswählfenster ist.

5. System nach Anspruch 1, 2,oder 3, **dadurch gekennzeichnet, dass** die Zunge/-n für jeden Parameter ES, PP, CV, AA mindestes so viele Markierungen (42) aufweist/-en, wie der entsprechende Parameter Werte hat, wobei die Markierungen Beschreibungen der Parameterwerte sind.

6. System nach einem der Ansprüche 1 bis 5. **dadurch gekennzeichnet, dass** der Abakus (31) zur Bestimmung des mineralischen Futterzusatzes, CM, auf der Basis des Zusatz-Index, IC, einen Träger (33) und eine auf dem Träger drehend bewegbare Scheibe (32) aufweist, wobei die bewegbare Scheibe einen kreissegmentförmigen Ausschnitt (34, 35, 36) und eine Reihe von Zahlen (38) aufweist, die seitlich entlang dem Rand des Ausschnitts angeordnet sind und Werten der Trockenmasse-Gesamtration , RTMS, in Gewicht pro Tag für ein Tier entsprechen, wobei der Träger für jeden möglichen Wert des Zusatz-Index IC eine Reihe von radial angeordneten Zahlen aufweist, welche Werten des mineralischen Futterzusatzes, CM, (37) entsprechen, wobei jede der RTMS-Zahlen der Zahlenreihe der bewegbaren Scheibe mit einer auf dem Träger (33) vorgesehenen Zahl CM = IC x RTMS in Beziehung steht.

7. System nach einem der vorhergehenden Ansprüche, **dadurch gekennzeichnet, dass** die verschiedenen Werte des Bedarfs an mineralischem Futterzusatz, VBCM-ES, VBCM-PP, VBCM-CV, VBCM-AA, unabhängig voneinander bestimmt werden.

8. System nach einem der vorhergehenden Ansprüche, **dadurch gekennzeichnet, dass** für mindestens einen ein bestimmtes Tier der Herde betreffenden Parameter, dieser Parameter des Tieres ausgehend von dem selben, die Herde betreffenden Parameter geschätzt wird.

9. System nach einem der vorhergehenden Ansprüche, **dadurch gekennzeichnet, dass** zur Bestimmung der Werte des Bedarfs an mineralischem Futterzusatz VBCM-ES, VBCM-PP, VBCM-CV, VBCM-AA, eine dreistufige Skala verwendet wird, wobei die drei Stufen entsprechen:
hinsichtlich des Gesundheitszustands des Tiers, ES:
• wenig Probleme hinsichtlich der Gesundheit oder der Reproduktion,
• einige zu beseitigende Probleme im Verlauf eines Jahres,
• erhebliche Probleme mit dringend erforderlicher Behebung im Verlauf eines Jahres,
hinsichtlich des Produktionspotentials des Tieres, EP:
• mittel, jedoch nicht vollständig exprimiert,
• hoch, jedoch verbesserungsfähig,
• sehr hoch, jedoch in bezug auf die Genetik der Herde nicht vollständig exprimiert,
hinsichtlich der Lebensbedingungen des Tiers, CV:
• normale Bedingungen bezüglich der Gebäude, der Hygiene, des Melkens, der Belastung, der Umgebung,
• hohe Belastungsbedingungen oder ungeeignete Gebäude oder störende Umgebung,
• störende Bedingungen bezüglich des Melkens, der Gebäude, der Belastung und der Umgebung,
und hinsichtlich der Ernährung des Tiers, AA:
• natürlich mit Gras, Heu, Getreide ..., Futtermitteln guter Qualität
• intensiv mit Weidefutter, Heu, Silage, Getreide, Kraftfutter, Futtermitteln guter Qualität
• sehr intensiv mit Silage, Kraftfutter, industriellen Nebenprodukten, Futtermitteln schlechter Qualität.

10. System zur Durchführung eines Verfahrens zur Bestimmung eines mineralischen Futterzusatzes zur Ernährung eines Tieres, das eine Futterration erhält,
**dadurch gekennzeichnet, dass** es Einrichtungen für einen in Gewicht pro Tag ausgedrückten mineralischen Futterzusatz, CM, und für eine in Gewicht pro Tag ausgedrückte Futterration, bei welcher es sich um eine Trockenmasse-Gesamtration, RTMS, handelt, aufweist, wobei die Einrichtungen die Bestimmung eines Zusatz-Index, IC, ermöglichen, auf dessen Basis der mineralische Futterzusatz, CM, ermittelt wird, wobei sich der mineralische Futterzusatz ergibt aus:
(i) der Wahl und der Auswertung jedes der folgenden Parameter:
• Gesundheitszustand des Tiers, ES,
• Produktionspotential des Tiers, PP,
• Lebensbedingungen des Tiers, CV,
• Ernährung des Tiers, AA;
(ii) der Bestimmung des Bedarfswerts an mineralischem Futterzusatz, VBCM, ausgedrückt in Gewicht pro RTMS und pro Tag in Abhängigkeit vom Wert der jeweiligen Parameter,
wobei der dem ES entsprechende VBCM als VBCM-ES bezeichnet wird und umso größer ist, je schlechter der Gesundheitszustand des Tieres ist;
wobei der dem PP entsprechende VBCM als VBCM-PP bezeichnet wird und umso größer ist, je größer das Produktionspotential des Tieres ist;
wobei der den CV entsprechende VBCM als VBCM-CV bezeichnet wird und umso größer ist, je schlechter die Lebensbedingungen des Tiers sind;
wobei der der AA entsprechende VBCM als VBCM-AA bezeichnet wird und umso größer ist, je schlechter die Qualität der Ernährung des Tieres ist;
(iii) der Addition der unterschiedlichen Werte des Bedarfs an mineralischem Futterzusatz zur Erzeugung eines Zusatz-Index, IC, nämlich IC = VBCM-ES + VBCM-PP + VBCM-CV + VBCM-AA,
(iv) und der Bestimmung des mineralischen Futterzusatzes auf der Basis des Zusatz-Index in Abhängigkeit von der Trockenmasse-Gesamtration durch CM = IC x RTMS,
wobei das System eine Computereinrichtung zum Bestimmen des Zusatz-Index, IC, und des mineralischen Futterzusatzes, CM, auf der Basis des Zusatz-Index IC aufweist, wobei die Computereinrichtung die Eingabe der Werte der Parameter ES, PP, CV, AA, das Berechnen jedes VBCM unabhängig oder in Abhängigkeit von den anderen Parametern, die eventuelle Anzeige jedes VBCM und des IC, die Eingabe der Trockenmassen-Gesamtration und das Berechnen und Anzeigen des mineralischen Futterzusatzes CM ermöglicht.

11. System nach Anspruch 10, **dadurch gekennzeichnet, dass** die Trockenmasse-Gesamtration durch die Computereinrichtung ausgehend von den Merkmalen des Tieres bestimmt wird.

12. System nach Anspruch 10 oder 11, **dadurch gekennzeichnet, dass** die verschiedenen Werte des Bedarfs an mineralischem Futterzusatz, VBCM-ES, VBCM-PP, VBCM-CV, VBCM-AA, unabhängig voneinander bestimmt werden.

13. System nach einem der vorhergehenden Ansprüche 10 bis 12, **dadurch gekennzeichnet, dass** für mindestens einen ein bestimmtes Tier der Herde betreffenden Parameter, dieser Parameter des Tieres ausgehend von dem selben, die Herde betreffenden Parameter geschätzt wird.

14. System nach einem der vorhergehenden Ansprüche 10 bis 13, **dadurch gekennzeichnet, dass** zur Bestimmung der Werte des Bedarfs an mineralischem Futterzusatz VBCM-ES, VBCM-PP, VBCM-CV, VBCM-AA, eine dreistufige Skala verwendet wird, wobei die drei Stufen entsprechen:
hinsichtlich des Gesundheitszustands des Tiers, ES:
• wenig Probleme hinsichtlich der Gesundheit oder der Reproduktion,
• einige zu beseitigende Probleme im Verlauf eines Jahres,
• erhebliche Probleme mit dringend erforderlicher Behebung im Verlauf eines Jahres,
hinsichtlich des Produktionspotentials des Tieres, EP:
• mittel, jedoch nicht vollständig exprimiert,
• hoch, jedoch verbesserungsfähig,
• sehr hoch, jedoch in bezug auf die Genetik der Herde nicht vollständig exprimiert,
hinsichtlich der Lebensbedingungen des Tiers, CV:
• normale Bedingungen bezüglich der Gebäude, der Hygiene, des Melkens, der Belastung, der Umgebung,
• hohe Belastungsbedingungen oder ungeeignete Gebäude oder störende Umgebung,
• störende Bedingungen bezüglich des Melkens, der Gebäude, der Belastung und der Umgebung,
und hinsichtlich der Ernährung des Tiers, AA:
• natürlich mit Gras, Heu, Getreide ..., Futtermitteln guter Qualität
• intensiv mit Weidefutter, Heu, Silage, Getreide, Kraftfutter, Futtermitteln guter Qualität
• sehr intensiv mit Silage, Kraftfutter, industriellen Nebenprodukten, Futtermitteln schlechter Qualität.
